# EUROPÄISCHE PATENTANMELDUNG

(11) **EP 4 527 174 A1**
(43) Veröffentlichungstag der Anmeldung: **26.03.2025**
(21) Anmeldenummer: 24190767.4
(22) Anmeldetag: 25.07.2024
(51) Int. Cl.: A01B 79/00, A01D 43/073, A01D 43/08

(54) **VERFAHREN ZUR ANSTEUERUNG EINER SELBSTFAHRENDEN LANDWIRTSCHAFTLICHEN ERNTEMASCHINE SOWIE SELBSTFAHRENDE LANDWIRTSCHAFTLICHE ERNTEMASCHINE**

(30) Priorität: 21.09.2023 DE 102023125646
(71) Anmelder: CLAAS Selbstfahrende Erntemaschinen GmbH, 33428 Harsewinkel (DE)
(72) Erfinder: Thiesmann, Waldemar, 49080 Osnabrück (DE); Bussmann, Christoph, 33428 Harsewinkel (DE); Bormann, Bastian, 33334 Gütersloh (DE); Hartmann, Ralf, 49324 Melle (DE); Penner, John, 48361 Beelen (DE); Neitemeier, Dennis, 59510 Lippetal (DE); Lutterbeck, Dennis, 48291 Telgte (DE)
(74) Vertreter: CLAAS Gruppe

(57) **Zusammenfassung**

Die Erfindung betrifft ein Verfahren zur Ansteuerung einer selbstfahrenden landwirtschaftlichen Erntemaschine (1) in Abhängigkeit einer Oberflächenbeschaffenheit eines von der Erntemaschine (1) zu überfahrenden Untergrunds (10), die Erntemaschine (1) umfassend mindestens eine an einem Maschinenrahmen (3) der Erntemaschine (1) gelagerte Überladeeinrichtung (4) zum Überladen von von der Erntemaschine (1) aufgenommenem Erntegut (5) an ein die Erntemaschine (1) begleitendes Transportfahrzeug (2), mindestens eine Auswerte- und Steuereinheit, mindestens einen Fahrantrieb zum Vortrieb der Erntemaschine (1), wobei die Überladeeinrichtung (4) mittels mindestens eines Aktors in ihrer Höhe verstellbar ist, wobei der Aktor und der Fahrantrieb mittels der Auswerte- und Steuereinheit ansteuerbar sind.

Um die Gefahr von Ernteverlusten zu minimieren, sind erfindungsgemäß folgende Verfahrensschritte vorgesehen.
- Ermitteln der Oberflächenbeschaffenheit des zu überfahrenden Untergrunds (10).
- Ansteuern des Fahrantriebs und/oder des Aktors mittels der Auswerte- und Steuereinheit in Abhängigkeit der ermittelten Oberflächenbeschaffenheit,
- wobei die Ansteuerung bei ebener Oberflächenbeschaffenheit mit einer Standard-Steuerungsstrategie erfolgt und die Ansteuerung bei unebener Oberflächenbeschaffenheit mit einer Sicherheits-Steuerungsstrategie erfolgt.

Ferner betrifft die Erfindung eine entsprechende Erntemaschine (1).

## Beschreibung

Die vorliegende Erfindung betrifft ein Verfahren zur Ansteuerung einer selbstfahrenden landwirtschaftlichen Erntemaschine gemäß dem Oberbegriff von Anspruch 1. Des Weiteren betrifft die Erfindung eine selbstfahrende landwirtschaftliche Erntemaschine gemäß Anspruch 13.

Die selbstfahrende landwirtschaftliche Erntemaschine weist zur Ermöglichung eines Überladens von Erntegut auf ein neben oder hinter der Erntemaschine herfahrendes Transportfahrzeug eine höhenverstellbare Überladeeinrichtung auf, die an einem Maschinenrahmen der Erntemaschine gelagert ist. Die Überladeeinrichtung, welche auch als "Auswurfkrümmer" bezeichnet wird, ist in aller Regel zumindest um eine horizontale Achse verschwenkbar gegenüber einem Maschinenrahmen der Erntemaschine ausgebildet. Die Überladeeinrichtung lässt sich typischerweise mittels eines Hydraulikzylinders oder eines Elektromotors horizontal verschwenken. Auf diese Weise kann eine Höhe der Überladeeinrichtung relativ zu dem Maschinenrahmen der Erntemaschine verstellt werden. Zudem ist die Überladeeinrichtung in aller Regel auch um eine vertikale Achse drehbar gelagert, sodass sich die Überladeeinrichtung derart in ihrer Ausrichtung verstellen lässt, dass sowohl ein Überladen von Erntegut in ein neben als auch hinter der Erntemaschine herfahrendes Transportfahrzeug ermöglicht ist. Die Erntemaschine umfasst des Weiteren mindestens eine Auswerte- und Steuereinheit und mindestens einen Fahrantrieb zum Vortrieb der Erntemaschine, wobei die Überladeeinrichtung mittels mindestens eines Aktors in ihrer Höhe und/oder im Hinblick auf eine Wurfweite verstellbar ist. Die Einstellung der Wurfweite wird entweder dadurch erreicht, dass die gesamte Überladeeinrichtung oder aber eine an einem Auswurfende befindliche Auswurfklappe verschwenkt wird. Der Aktor und/oder der Fahrantrieb sind mittels der Auswerte- und Steuereinheit ansteuerbar.

Beim Überladen von Erntegut ausgehend von der selbstfahrenden landwirtschaftlichen Erntemaschine auf das Transportfahrzeug können jedoch Schwierigkeiten auftreten, die zu einem Erntegutverlust führen. Insbesondere bei einer Überfahrt der Erntemaschine über Bodenunebenheiten führen die hieraus auf die Überladeeinrichtung übertragenen Nick- und Wankbewegungen zu einer Positionsänderung eines auswurfseitigen Endes der Überladeeinrichtung, da die Überladeeinrichtung aufgrund der Lagerung an dem Maschinenrahmen zu einer Mitbewegung mit dem Maschinenrahmen gezwungen wird. Folge kann eine Verfehlung eines angestrebten Zielpunkts eines aus der Überladeeinrichtung austretenden Erntegutstrahls sein.

Zur Lösung dieser Problematik sind Verfahren zur aktiven Dämpfung von Schwingungen der Überladeeinrichtung bekannt. Beispielhaft wird auf die in der DE 10 2010 017 459 A1 beschriebene Erntemaschine verwiesen. Die dort beschriebene Erntemaschine weist eine Überladeeinrichtung auf, die mittels eines Aktors in ihrer Höhe verstellbar ist. Ferner weist die Erntemaschine ein System zur aktiven Dämpfung von Schwingungen der Überladeeinrichtung auf, wobei das System einen Sensor zur Erfassung einer Schwingungsursache und eine Auswerte- und Steuereinheit umfasst, welche den Aktor in Abhängigkeit der ermittelten Schwingungsursache betätigt und somit die Schwingungen dämpfen soll. Der Sensor kann dabei in Form eines Belastungssensors oder eines Beschleunigungssensors ausgebildet sein. Als nachteilig an dem vorbeschriebenen Verfahren hat sich jedoch herausgestellt, dass das System nicht für alle denkbaren Bodenunebenheiten eine wirksame Dämpfung der Überladeeinrichtung erreichen kann.

Die Aufgabe der vorliegenden Erfindung liegt nach alldem darin, ein Verfahren zur Ansteuerung einer selbstfahrenden landwirtschaftlichen Erntemaschine bereitzustellen, mit dem das Problem von Erntegutverlusten minimiert wird.

Die zugrunde liegende Aufgabe wird erfindungsgemäß mittels eines Verfahrens mit den Merkmalen des Anspruchs 1 gelöst. Vorteilhafte Ausgestaltungen ergeben sich aus den zugehörigen Unteransprüchen.

Das erfindungsgemäße Verfahren ist durch die folgenden Verfahrensschritte gekennzeichnet:

In einem ersten Schritt wird eine Oberflächenbeschaffenheit des zu überfahrenden Untergrunds ermittelt. In einem zweiten Schritt wird sodass der Fahrantrieb und/oder der Aktor mittels der Auswerte- und Steuereinheit in Abhängigkeit der ermittelten Oberflächenbeschaffenheit angesteuert. Dabei erfolgt die Ansteuerung bei ebener Oberflächenbeschaffenheit mit einer Standard-Steuerungsstrategie und die Ansteuerung bei unebener Oberflächenbeschaffenheit mit einer Sicherheits-Steuerungsstrategie.

Eine unebene Oberflächenbeschaffenheit liegt dann vor, wenn der zu überfahrende Untergrund Löcher, Erhebungen, Bodenwellen, Querrillen oder Furchen aufweist. Dies kann beispielsweise bei landwirtschaftlichen Feldern auftreten, wenn diese zuvor von Bewässerungsanlagen oder anderen landwirtschaftlichen Maschinen überfahren wurden. Die unebene Oberflächenbeschaffenheit führt zu einem ruppigen Fahrverhalten der Erntemaschine und somit zu einem Wanken sowie Nicken, das sich schließlich auch auf die Überladeeinrichtung überträgt und letztlich zu einem fehlerhaften Auswurf des Ernteguts.

Das erfindungsgemäße Verfahren hat viele Vorteile: mit dem erfindungsgemäßen Verfahren ist es möglich, die Steuerungsstrategie für die Überladeeinrichtung an die tatsächlich vorliegende Oberflächenbeschaffenheit anzupassen. Bei ebener Oberflächenbeschaffenheit erfolgt die Ansteuerung mit der Standard-Steuerungsstrategie, die typischerweise das Ziel verfolgt, eine gleichmäßige Befüllung des Transportfahrzeugs zu erreichen. Bei der Standard-Steuerungsstrategie ist beispielsweise eine höhere Geschwindigkeit des Fahrerantriebs möglich.

Wird hingegen eine unebene Oberflächenbeschaffenheit ermittelt, die zu Wankbewegungen der Erntemaschine führt, erfolgt die Ansteuerung des Fahrantriebs und/oder des Aktors mit der Sicherheits-Steuerungsstrategie. Diese kann beispielsweise vorsehen, dass die Geschwindigkeit des Fahrerantriebs der Erntemaschine gedrosselt wird. Bei einem Überladen quer zur Fahrtrichtung kann gemäß der Sicherheits-Steuerungsstrategie vorgesehen sein, dass der Aktor den Abwurf des Ernteguts in Richtung der Mitte des Transportfahrzeugs vorsieht. Auf diese Weise kann zwar die gleichmäßige Befüllung des Transportfahrzeugs verschlechtert werden, jedoch wird dieser Umstand im Hinblick auf die Vermeidung von Ernteverlusten in Kauf genommen.

Gemäß einer vorteilhaften Ausgestaltung der Erfindung ist vorgesehen, dass der Aktor der Überladeeinrichtung bei Ansteuerung mit der Standard-Steuerungsstrategie in Abhängigkeit eines aktuellen Füllstands des die Erntemaschine begleitenden Transportfahrzeugs angesteuert wird. Hierdurch lässt sich eine gleichmäßige Befüllung des Transportfahrzeugs erreichen.

In Bezug auf die Standard-Steuerungsstrategie kann vorteilhafterweise vorgesehen sein, dass der Aktor derart angesteuert wird, dass eine Auswurfrichtung eines Erntegutstroms kontinuierlich angepasst wird, sodass das Erntegut - bezogen auf eine Aufladefläche des Transportfahrzeugs - gleichmäßig verteilt wird. Als "Aufladefläche" des Transportfahrzeugs wird dabei eine Fläche verstanden, auf der das Erntegut nach erfolgter Überladung aufliegen soll. Beispielsweise kann vorgesehen sein, dass das Transportfahrzeug einen Anhänger aufweist, wobei ein Boden des Anhängers die Aufladefläche bildet. Bei einem Überladen quer zur Fahrtrichtung kann beispielsweise vorgesehen sein, dass ein Abwurf des Ernteguts bei niedrigem Füllstand zunächst in Richtung einer der Erntemaschine zugewandten Wand des Transportfahrzeugs erfolgt, wobei bei steigendem Füllstand des Transportfahrzeugs der Abwurf in Richtung Mitte des Transportfahrzeugs verlagert wird.

Dementsprechend ist es gemäß einer Weiterentwicklung der Erfindung besonders von Vorteil, wenn ein Endpunkt einer Flugbahn des in Auswurfrichtung auf das Transportfahrzeug ausgeworfenen Erntegutstroms mit zunehmendem Füllstand des Transportfahrzeugs ausgehend von einem ersten Endpunkt zu einem zweiten Endpunkt verlagert wird, wobei der erste Endpunkt vorzugsweise in einem der Erntemaschine zugewandten Bereich der Aufladefläche angeordnet ist und wobei der zweite Endpunkt vorzugsweise in einem Mittelbereich der Aufladefläche des Transportfahrzeugs angeordnet ist.

Im Hinblick auf die Sicherheits-Steuerungsstrategie ist es von Vorteil, wenn der Aktor der Überladeeinrichtung bei Ansteuerung mit der Sicherheits-Steuerungsstrategie unabhängig von einem aktuellen Füllstand des die Erntemaschine begleitenden Transportfahrzeugs angesteuert wird. Im Fall einer unebenen Oberflächenbeschaffenheit des Untergrundes tritt die Zielsicherheit der Überladeeinrichtung in den Vordergrund, da Ernteverluste unbedingt zu vermeiden sind. Die optimale Befüllung des Transportfahrzeugs ist in diesem Fall eher zweitrangig.

Zusätzlich kann es im Hinblick auf die Sicherheits-Steuerungsstrategie von Vorteil sein, wenn der Aktor derart angesteuert wird, dass die Auswurfrichtung des Erntegutstroms konstant gehalten wird, wobei vorzugsweise ein Endpunkt der Flugbahn des Erntegutstroms in einem Mittelbereich der Aufladefläche des Transportfahrzeugs angeordnet ist.

Alternativ oder zusätzlich kann gemäß einer vorteilhaften Weiterbildung des erfindungsgemäßen Verfahrens vorgesehen sein, dass der Fahrantrieb bei Ansteuerung mit der Sicherheits-Steuerungsstrategie derart angesteuert wird, dass eine Geschwindigkeit, vorzugsweise nach einer vorigen Reduzierung, konstant gehalten wird. Bei reduzierter Fahrgeschwindigkeit reduziert sich ebenfalls das Ausmaß der Wank- und/ oder Nickbewegungen, so dass sich die Auswurfgenauigkeit erhöht.

Eine vorteilhafte Ausgestaltung der Erfindung sieht vor, dass die Oberflächenbeschaffenheit des zu überfahrenden Untergrunds mittels offline-erzeugter Daten und/oder mittels online-erzeugter Daten bestimmt wird. Die offline-erzeugten Daten können beispielsweise mittels mindestens eines Satelliten oder mittels mindestens einer Drohne oder Mittels Kartierung erzeugt worden sein. Die Kartierung kann beispielsweise Routen von Beregnern oder anderen Fahrgassen von Geräten beinhalten, die auf dem Feld genutzt wurden. Die Online-erzeugten Daten können beispielsweise mittels mindestens eines an der Erntemaschine und/oder an dem Transportfahrzeug angeordneten Sensors bestimmt werden, wobei es sich bei dem Sensor beispielsweise um eine Kamera, einen Radar-Sensor, einen Laser, einen Ultraschall-Sensor, einen Gyro-Sensor oder einen kapazitiven Sensor handeln kann.

Ferner kann gemäß einer vorteilhaften Ausgestaltung des erfindungsgemäßen Verfahrens vorgesehen sein, dass die Oberflächenbeschaffenheit des zu überfahrenden Untergrunds ausgehend von einer Auslenkung einer gefederten Frontachse der Erntemaschine und/oder des Transportfahrzeugs ermittelt wird.

Im Hinblick auf eine landwirtschaftliche selbstfahrende Erntemaschine wird die eingangs genannte Aufgabe dadurch gelöst, dass die Erntemaschine dazu hergerichtet und geeignet ist, ein Verfahren nach einem der Ansprüche 1 bis 12 durchzuführen. Hierbei ergeben sich die Vorteile analog zu den vorbeschriebenen Vorteilen des erfindungsgemäßen Verfahrens.

Schließlich ist es vorteilhaft, wenn die Erntemaschine in Form eines Feldhäckslers oder Mähdreschers ausgebildet ist.

Die Erfindung ist nachstehend anhand eines Ausführungsbeispiels, das in den Figuren dargestellt ist, näher erläutert. Es zeigt:
- Fig. 1:: Einen Vertikalschnitt durch eine erfindungsgemäße selbstfahrende landwirtschaftliche Erntemaschine sowie ein Transportfahrzeug,
- Fig. 2:: Eine Ansicht der Erntemaschine nach Figur 1 mit in Fahrtrichtung dahinter befindlichem Transportfahrzeug und
- Fig. 3:: Eine Draufsicht auf die Erntemaschine nach Figur 2.

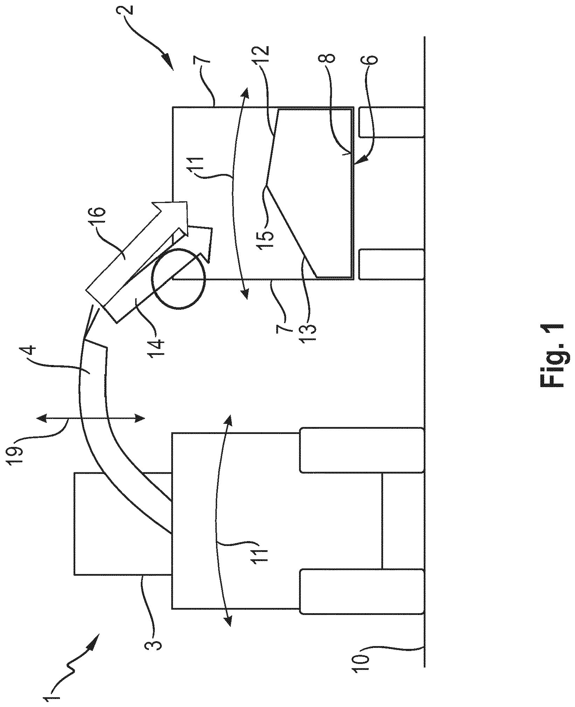

In den **Figuren 1 bis 3** sind eine erfindungsgemäße selbstfahrende landwirtschaftliche Erntemaschine **1** sowie jeweils ein die Erntemaschine **1** begleitendes Transportfahrzeug **2** schematisch dargestellt. Die Erntemaschine **1** weist einen Maschinenrahmen **3** auf, an dem eine Überladeeinrichtung **4** angeordnet ist. Die Überladeeinrichtung **4** dient einem Überladen von Erntegut **5** an das Transportfahrzeug **2,** wobei das Erntegut **5** zuvor von der Erntemaschine **1** aufgenommen wurde. Bei dem Transportfahrzeug **2** handelt es sich um einen Muldenkipper mit einem Boden **6** und vier Außenwänden **7,** wobei der Boden **6** als Aufladefläche **8** des Transportfahrzeugs **2** aufgefasst wird. In der **Figur 1** ist ein seitliches Überladen vorgesehen, bei dem das Überladen quer zur Fahrtrichtung **9** der Erntemaschine **1** erfolgt. Das Transportfahrzeug **2** weist in der **Figur 1** somit dieselbe Fahrtrichtung auf und fährt neben der Erntemaschine **1** her. Die Fahrtrichtung der Erntemaschine **1** gemäß **Figur 1** ist senkrecht zur Zeichenebene.

Die Erntemaschine **1** besitzt einen nicht in den Figuren dargestellten Fahrantrieb zum Vortrieb der Erntemaschine **1** sowie eine ebenfalls nicht in den Figuren dargestellte Auswerte- und Steuereinheit. Die Überladeeinrichtung **4** besitzt wiederum einen Aktor, mittels dem die Überladeeinrichtung **4** in ihrer Höhe (Pfeil **19)** verstellbar ist. Der Aktor ist nicht in den Figuren dargestellt. Sowohl der Fahrantrieb als auch der Aktor sind über die Auswerte- und Steuereinheit ansteuerbar.

Die Erntemaschine **1** überfährt einen Untergrund **10,** der in der **Figur 1** als ebene Fläche dargestellt ist. Eine Oberflächenbeschaffenheit des Untergrundes **10** kann jedoch auf landwirtschaftlichen Flächen stark variieren, so dass es beim Überfahren einer unebenen Oberflächenbeschaffenheit zu Wankbewegungen (Pfeil **11)** der Erntemaschine **1** und somit der Überladeeinrichtung **4** sowie des Transportfahrzeugs **2** kommt.

Erfindungsgemäß wird die Oberflächenbeschaffenheit des zu überfahrenden Untergrundes **10** ermittelt und in Abhängigkeit davon die Ansteuerung des Fahrantriebs und/oder des Aktors festgelegt. Bei ebener Oberflächenbeschaffenheit erfolgt die Ansteuerung mit einer Standard-Steuerungsstrategie, gemäß der ein optimales Befüllen des Transportfahrzeugs **2** im Fokus steht. Demgemäß wird der Aktor der Überladeinrichtung **4** in Abhängigkeit eines aktuellen Füllstandes **12** des Transportfahrzeugs **2** angesteuert. Bei geringem Füllstand **12** erfolgt der Abwurf des Ernteguts **5** so, dass ein Endpunkt **13** einer Flugbahn **14** des in Auswurfrichtung auf das Transportfahrzeug **2** ausgeworfenen Erntegutstroms in Richtung einer der Erntemaschine **1** zugewandten Wandung **7** des Transportfahrzeugs **2** liegt. Bei hohem Füllstand **12** erfolgt der Abwurf des Ernteguts **5** so, dass ein Endpunkt **15** einer Flugbahn **16** des in Auswurfrichtung auf das Transportfahrzeug **2** ausgeworfenen Erntegutstroms in Richtung Mitte des Transportfahrzeugs **2** liegt. Somit verlagert sich ein Endpunkt **13, 15** der Flugbahn **14, 16** des Erntegutstroms bei zunehmendem Füllstand **12** von einem ersten **13** Endpunkt zu einem zweiten Endpunkt **15.**

Bei unebener Oberflächenbeschaffenheit erfolgt die Ansteuerung mit einer Sicherheits-Steuerstrategie, die gemäß dem vorliegenden Beispiel unabhängig von dem Füllstand **12** des Transportfahrzeugs **2** ist. Die Sicherheits-Steuerstrategie kann vorsehen, dass die Auswurfrichtung des Erntegutstroms konstant gehalten wird, wobei die Auswurfrichtung vorteilhafterweise in Richtung Mittelbereich der Aufladefläche 8 erfolgt. Alternativ oder zusätzlich kann es bei der Sicherheits-Steuerstrategie vorgesehen sein, dass die Geschwindigkeit des Fahrantriebs gedrosselt und/oder konstant gehalten wird.

Zwecks Ermittlung der Oberflächenbeschaffenheit stehen verschiedene Mittel zur Verfügung, wobei die Daten offline oder online erzeugt werden können. Offline-erzeugte Daten können beispielsweise mittels eines Satelliten oder einer Drohne gesammelt werden. Online-erzeugte Daten können beispielsweise mittels eines Sensors **17** erfasst werden, die an der Erntemaschine **1** und/oder an dem Transportfahrzeug **2** angebracht sind. Bei diesen Sensoren kann es sich beispielsweise um eine Kamera, einen Radar-Sensor, einen Laser, einen Ultraschall-Sensor, einen Gyro-Sensor, einen kapazitiven Sensor oder ähnlichem handeln.

Ferner kann die Oberflächenbeschaffenheit des zu überfahrenden Untergrunds ausgehend von einer Auslenkung einer gefederten Front- und/oder Hinterachse **18** der Erntemaschine 1 und/oder des Transportfahrzeugs **2** ermittelt werden.

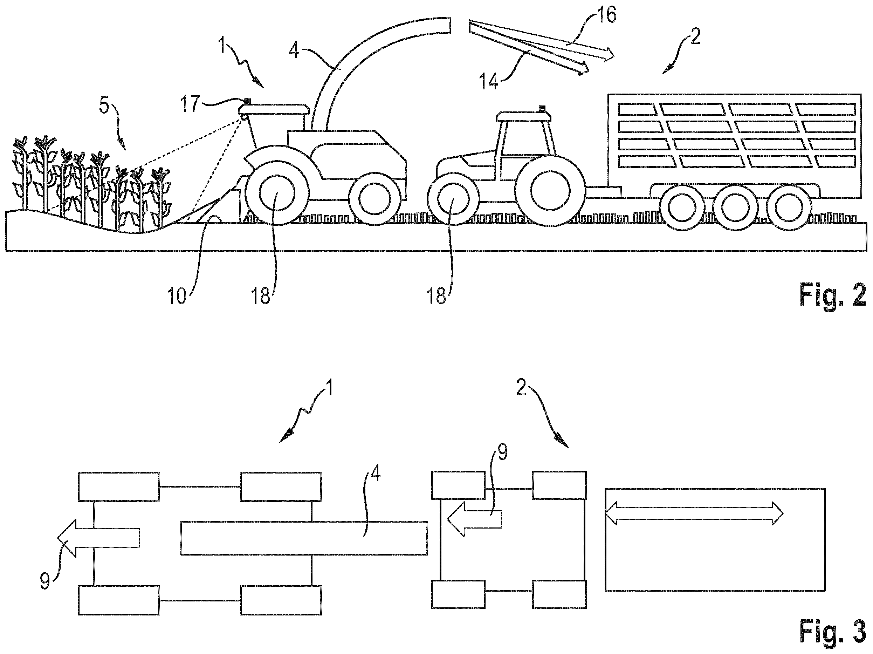

In den **Figuren 2 und 3** ist jeweils eine erfindungsgemäße Erntemaschine **1** mit einem dahinter fahrenden Transportfahrzeug **2** zu erkennen. Bei dem Transportfahrzeug **2** handelt es sich um einen Traktor mit einem Anhänger. Im Gegensatz zu der **Figur 1** erfolgt das Überladen von der Erntemaschine **1** in das Transportfahrzeug **2** parallel zur Fahrtrichtung **9,** wobei die Überladeeinrichtung **4** ebenfalls parallel zur Fahrtrichtung **9** ausgerichtet ist.

Mit der erfindungsgemäßen Erntemaschine **1** ist das erfindungsgemäße Verfahren, gemäß dem die Oberflächenbeschaffenheit des zu überfahrenden Untergrunds **10** ermittelt und abhängig davon der Fahrantrieb und/oder der Aktor mittels der Auswerte- und Steuereinheit angesteuert wird, wobei die Ansteuerung bei einer ebener Oberflächenbeschaffenheit mit einer Standard-Steuerungsstrategie erfolgt und die Ansteuerung bei unebener Oberflächenbeschaffenheit mit einer Sicherheits-Steuerungsstrategie erfolgt, besonders gut durchführbar.

### Bezugszeichenliste

- 1: Erntemaschine
- 2: Transportfahrzeug
- 3: Maschinenrahmen
- 4: Überladeeinrichtung
- 5: Erntegut
- 6: Boden
- 7: Außenwand
- 8: Aufladefläche
- 9: Fahrtrichtung
- 10: Untergrund
- 11: Pfeil (Wankbewegung)
- 12: Füllstand
- 13: Erster Endpunkt
- 14: Flugbahn
- 15: Zweiter Endpunkt
- 16: Flugbahn
- 17: Sensor
- 18: Achse
- 19: Pfeil (Bewegung Überladeeinrichtung)

## Patentansprüche

1. Verfahren zur Ansteuerung einer selbstfahrenden landwirtschaftlichen Erntemaschine (1) in Abhängigkeit einer Oberflächenbeschaffenheit eines von der Erntemaschine (1) zu überfahrenden Untergrunds (10), die Erntemaschine (1) umfassend
- mindestens eine an einem Maschinenrahmen (3) der Erntemaschine (1) gelagerte Überladeeinrichtung (4) zum Überladen von von der Erntemaschine (1) aufgenommenem Erntegut (5) an ein die Erntemaschine (1) begleitendes Transportfahrzeug (2),
- mindestens eine Auswerte- und Steuereinheit,
- mindestens einen Fahrantrieb zum Vortrieb der Erntemaschine (1),
- wobei die Überladeeinrichtung (4) mittels mindestens eines Aktors in ihrer Höhe und/oder im Hinblick auf eine Wurfweite verstellbar ist,
- wobei der Aktor und/oder der Fahrantrieb mittels der Auswerte- und Steuereinheit ansteuerbar sind,
**gekennzeichnet durch die folgenden Verfahrensschritte:**
- Ermitteln der Oberflächenbeschaffenheit des zu überfahrenden Untergrunds (10).
- Ansteuern des Fahrantriebs und/oder des Aktors mittels der Auswerte- und Steuereinheit in Abhängigkeit der ermittelten Oberflächenbeschaffenheit,
- wobei die Ansteuerung bei ebener Oberflächenbeschaffenheit mit einer Standard-Steuerungsstrategie erfolgt und die Ansteuerung bei unebener Oberflächenbeschaffenheit mit einer Sicherheits-Steuerungsstrategie erfolgt.

2. Verfahren nach Anspruch 1, **dadurch gekennzeichnet, dass** der Aktor der Überladeeinrichtung (4) bei Ansteuerung mit der Standard-Steuerungsstrategie in Abhängigkeit eines aktuellen Füllstands (12) des die Erntemaschine (1) begleitenden Transportfahrzeugs (2) angesteuert wird.

3. Verfahren nach Anspruch 2, **dadurch gekennzeichnet, dass** der Aktor derart angesteuert wird, dass eine Auswurfrichtung eines Erntegutstroms kontinuierlich angepasst wird, sodass das Erntegut (5) - bezogen auf eine Aufladefläche (8) des Transportfahrzeugs (2) - gleichmäßig verteilt wird.

4. Verfahren nach Anspruch 3, **dadurch gekennzeichnet, dass** ein Endpunkt (13, 15) einer Flugbahn (14, 16) des in Auswurfrichtung auf das Transportfahrzeug (2) ausgeworfenen Erntegutstroms mit zunehmendem Füllstand (12) des Transportfahrzeugs (2) ausgehend von einem ersten Endpunkt (13) zu einem zweiten Endpunkt (15) verlagert wird, wobei der erste Endpunkt (13) vorzugsweise in einem der Erntemaschine (1) zugewandten Bereich der Aufladefläche (8) angeordnet ist und wobei der zweite Endpunkt (15) vorzugsweise in einem Mittelbereich der Aufladefläche (8) des Transportfahrzeugs (2) angeordnet ist.

5. Verfahren nach einem der vorhergehenden Ansprüche, **dadurch gekennzeichnet, dass** der Aktor der Überladeeinrichtung (4) bei Ansteuerung mit der Sicherheits-Steuerungsstrategie unabhängig von einem aktuellen Füllstand (12) des die Erntemaschine (1) begleitenden Transportfahrzeugs (2) angesteuert wird.

6. Verfahren nach Anspruch 5, **dadurch gekennzeichnet, dass** der Aktor derart angesteuert wird, dass die Auswurfrichtung des Erntegutstroms konstant gehalten wird, wobei vorzugsweise ein Endpunkt (15) der Flugbahn des Erntegutstroms in einem Mittelbereich der Aufladefläche (8) des Transportfahrzeugs (2) angeordnet ist.

7. Verfahren nach einem der vorhergehenden Ansprüche, **dadurch gekennzeichnet, dass** der Fahrantrieb bei Ansteuerung mit der Sicherheits-Steuerungsstrategie derart angesteuert wird, dass eine Geschwindigkeit, vorzugsweise nach einer vorigen Reduzierung, konstant gehalten wird.

8. Verfahren nach einem der vorhergehenden Ansprüche, **dadurch gekennzeichnet, dass** die Oberflächenbeschaffenheit des zu überfahrenden Untergrunds (10) mittels offline-erzeugter Daten und/oder mittels online-erzeugter Daten bestimmt wird.

9. Verfahren nach Anspruch 8, **dadurch gekennzeichnet, dass** die offline-erzeugten Daten mittels mindestens eines Satelliten oder mittels mindestens einer Drohne oder mittels Kartierung erzeugt wurden.

10. Verfahren nach Anspruch 8 oder 9, **dadurch gekennzeichnet, dass** die online-erzeugten Daten mittels mindestens eines an der Erntemaschine (1) und/oder an dem Transportfahrzeug (2) angeordneten Sensors (17) bestimmt werden.

11. Verfahren nach Anspruch 10, **dadurch gekennzeichnet, dass** es sich bei dem Sensor (17) um eine Kamera, einen Radar-Sensor, einen Laser, einen Ultraschall-Sensor, einen Gyro-Sensor oder einen kapazitiven Sensor handelt.

12. Verfahren nach einem der vorhergehenden Ansprüche, **dadurch gekennzeichnet, dass** die Oberflächenbeschaffenheit des zu überfahrenden Untergrunds (10) ausgehend von einer Auslenkung einer gefederten Front- und/oder Hinterachse (18) der Erntemaschine (1) und/oder des Transportfahrzeugs (2) ermittelt wird.

13. Landwirtschaftliche selbstfahrende Erntemaschine (1), **dadurch gekennzeichnet, dass** die Erntemaschine (1) dazu hergerichtet und geeignet ist, ein Verfahren nach einem der Ansprüche 1 bis 12 durchzuführen.

14. Landwirtschaftliche selbstfahrende Erntemaschine (1) nach Anspruch 13, **dadurch gekennzeichnet, dass** die Erntemaschine (1) in Form eines Feldhäckslers oder Mähdreschers ausgebildet ist.
